# EUROPEAN PATENT APPLICATION

(11) **EP 3 018 623 A1**
(43) Date of publication of application: **11.05.2016**
(21) Application number: 15158667.4
(22) Date of filing: 11.03.2015
(51) Int. Cl.: G06Q 30/06

(54) **A system for providing authenticated recommendations on goods or services**

(30) Priority: 06.11.2014 EP 14192135
(71) Applicant: Nagravision S.A., 1033 Cheseaux-sur-Lausanne (CH)
(72) Inventor: Bellocchio, Marc, 13400 Aubagne (FR); Lefloch, Dominique, 92120 Montrouge (FR); Soulier, Julien, 13600 La Ciotat (FR); Delpuch, Alain, 75013 Paris (FR)
(74) Representative: Leman Consulting S.A.

(57) **Abstract**

Aspects of the present disclosure relate to systems devices and methods for providing online authenticated recommendations of services. There is described a way of providing authenticated user recommendations relative to the appreciation of goods or services by registered users. A method for providing authenticated recommendations is disclosed, using an application on a mobile payment terminal and an authenticated recommendation server to push authenticated user recommendations onto merchants' servers or recommendation sites.

## Description

### TECHNICAL DOMAIN

The present disclosure generally relates to the domain of network-accessible resources describing third-party services, particularly when users of the resources are able to provide recommendations to fellow users as to the trustworthiness of the third-party services. An example of a network-accessible resource is an Internet web-site. Internet connected devices, especially those used to facilitate payments, or web-sites providing payment services may incorporate features or methods discussed in the present disclosure.

### STATE OF THE ART

The state of the art includes means for one or more users to provide recommendations relative to certain goods or services provided via a network-accessible resource, such as the Internet, for the attention of other users who may connect to or otherwise invoke the resource. For example, certain Internet web-sites exist which advertise goods or services, such as hotel rooms for rent, in the case of a web-site for a particular hotel. The site may further offer a recommendation based on an input or feedback received from a previous customer who stayed at the hotel. Other specialist web-sites exist, which advertise goods or services from a large number of competing suppliers and which provide recommendations relative to each of the different suppliers and their goods and/or services, the recommendations being based on feedback from past customers of those goods and/or services.

Hotels and restaurants tend to be particularly fond of this type of mechanism as part of their marketing strategy, whereby past customers are encouraged to provide feedback relative to the experience they had when using the services advertised. Consequently, web-sites owned by the individual hotels or restaurants may be configured to allow past customers to provide their feedback and to allow potential customers to review the feedback. Other specialist sites exist which provide the interface allowing for past customers to provide their feedback on various different services, the specialist sites catering for a large number of hotels, thereby relieving the individual hotel from the burden of providing this so-called "recommendation" service itself.

Currently, recommendations (feedback) provided by users on the various sites providing such services for receiving past customers' feedback, cannot be verified or authenticated easily. Indeed, some users are sometimes paid to create false recommendations to either enhance or tarnish the reputation of a particular provider of services via a site where recommendations for that provider's services are noted. As more and more products are sold by internet, trusted recommendations will be more important for the future so as to reliably discriminate merchants from each other or their products from each other.

### BRIEF SUMMARY OF THE INVENTION

Aspects of the present disclosure are related to methods for authenticating a user who provides a recommendation on a site as well as authenticating the recommendation provided, thereby validating or otherwise certifying that the recommendation can be considered, with a high level of confidence, to be a legitimate one. Aspects of the disclosure therefore cover ways and means to make sure that the recommendation actually corresponds to a real purchase of the associated goods or services by the user who provided the recommendation.

Aspects of the present invention can be used in relation to services advertised on a web-site, such as restaurant facilities or hotel services for example, and may be extended to apply to other services or goods advertised via a web-site, such as automobiles, high-tech products, holidays, many different services etc. Such methods provide end users with more confidence in the legitimacy of recommendations as they will be able to rely on the approbation of a trusted community. Benefits are also to be had by site partners and merchants, who would be able to export trusted recommendations lists.

According to one aspect, there is described the introduction of a root certification authority, providing a link between the user, the recommendation and a proof of payment (e.g. a bill or an invoice).

There is described a system for providing an authenticated user recommendation relative to a recommendation provided by a user for a service or goods offered by a merchant, the system comprising an authenticated recommendation server, a mobile payment terminal and at least one merchant server for storing the authenticated user recommendation, the authenticated recommendation server being connectable via a network to the merchant server and to the payment terminal;
characterised in that:
the authenticated recommendation sever holds a user account corresponding to the user;
the payment terminal is configured to generate a purchase record associated with an act of purchasing the service or goods and to communicate the purchase record and a recommendation provided by the user relative to the thus-purchased service or goods to the authenticated recommendation server via the network; and
the authenticated recommendation server is configured to associate the user account with the user recommendation and at least the purchase record and to send the thus-authenticated user recommendation to the merchant server.

Provision is further made for a method for providing an authenticated user recommendation relative to a service or goods offered by a merchant, comprising:
using, by a user, a mobile payment terminal to generate a purchase identifier corresponding to a purchase of the service or goods;
generating, in the payment terminal, a purchase code related to the purchase identifier once the purchase has been made;
using the payment terminal to enter an appreciation by the user;
transmitting the purchase identifier and the corresponding appreciation via a network to an authenticated recommendation server;
storing the appreciation on the authenticated recommendation server in an account associated with the user;
associating, by the authenticated recommendation server, the appreciation with the user and the purchase code, thereby producing an authenticated recommendation;
downloading the authenticated recommendation to a server corresponding to the merchant.

### BRIEF DESCRIPTION OF THE DRAWINGS

The present invention will be better understood thanks to the detailed description which follows and the accompanying drawings, which are given as non-limiting examples of embodiments of the invention, namely:
Figure 1, showing a system in which an embodiment of the present invention may be deployed; and
Figure 2, illustrating a method according to an embodiment of the present invention.

### DETAILED DESCRIPTION

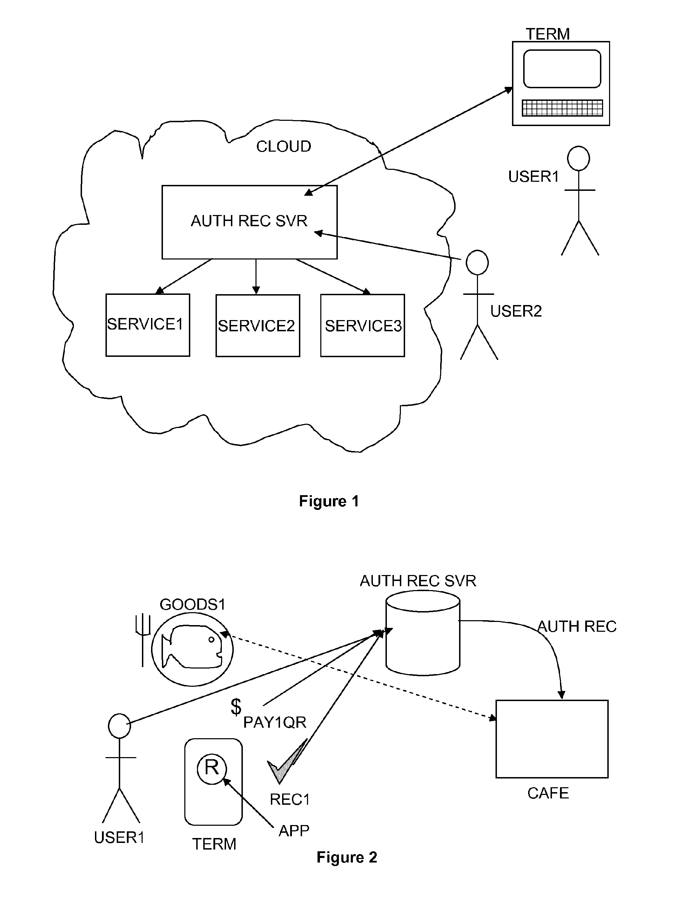

According to an embodiment of the present invention, which may find use in a system as shown in Figure 1 for providing recommendations related to goods or services provided by a supplier or a number of different suppliers, provision is made for a root certification authority to create a link between a user, the user's recommendation relative to a supplier's goods or services and a proof of payment (usually by the user) for the goods or services (e.g. a bill or an invoice for the goods or services). According to various embodiments of the invention, the root certification authority is represented by a sever configured to receive recommendations from users and to then provide authenticated recommendations to various merchants' servers or recommendation services' servers as described below.

A system in which an embodiment of the present invention may be deployed may comprise an authenticated recommendation server (the root certification authority), at least one merchant's server, the merchant making goods or services available to users and providing, via the server, an opportunity for a user to provide a recommendation or comment relative to the goods or services and a payment terminal for allowing a user to purchase the goods or services from the merchant or merchants. A merchant may delegate the recommendation service to a dedicated recommendation site which is specifically aimed at allowing users to provide recommendations or comments relative to any form a plurality of merchants. For example a recommendation site may allow for a user to comment on goods or services provided by any from a plurality of travel companies or hotels or restaurants. Recommendation sites therefore do not directly sell products or services but rather allow users to comment on merchants' goods or services in a particular domain. Such recommendation sites may also be included in a system in which an embodiment of the present invention is deployed. Generally, the authenticated recommendation server and the servers of the merchants and/or the recommendation sites may be interconnected via Internet. It can be said that they reside in the cloud. The payment terminal can communicate directly with the authenticated recommendation server via a bidirectional channel (usually via Internet) and the authenticated recommendation server can push data down to the merchants' sites (servers) and/or the recommendation sites. Figure 1 shows an example of a system in which an embodiment of the present invention may be deployed.

According to an embodiment providing for a method for providing authenticated recommendations related to goods or services, a user is allotted a user identifier. When the user purchases a particular service or particular goods from a merchant, he may pay for the goods or services either using a credit card. A credit card may be used along with a mobile banking application to perform a purchase. Purchasing goods using a credit card and/or the banking application generates a payment transaction having a reference number or other unique means of identification. According to the embodiment, any recommendation provided by the user relative to the thus purchased goods or services, may be allotted a recommendation identification number and be associated with the payment transaction reference number (payment ID). Thus, the user, the payment and the recommendation are linked with each other.

Figure 1 includes a payment terminal according to an embodiment of the present invention. A mobile phone, a tablet computer, a personal computer or a dedicated payment terminal may be adapted to realise an embodiment of the present invention. A payment terminal according to embodiments of the present invention is generally mobile in order to be usable while the user is on the move and therefore usually are configured to perform wireless communications. Such devices are already known in the state of the art to provide a user with an interface to allow a purchase of goods or services to be made via a web-site. A device such as one of those mentioned here, in which an embodiment of the present invention is deployed, may be adapted to provide a specific ticket (real or virtual) having a bar-code, a QR code or simply a reference number, as long as it links a user to a particular service or particular goods purchased by the user. The device may comprise a programmable engine configured to provide an interface allowing the user to provide his recommendation relative to the purchased goods or services. A recommendation may take the form of narrative text, freely entered by the user, or it may be in the form of a simple assertion such as "like" or "dislike" for example. Other forms of recommendation may include a "level" of satisfaction for a particular aspect related to the goods or services, with different levels being attributable to different aspects, for example a level from 1 to 5 indicating a level of satisfaction between "dissatisfied" and "delighted". The interface may be a virtual interface such as a GUI or may be a physical interface comprising one or more buttons for example, corresponding to "like" or "dislike" etc. When the interface is a GUI, any device having a display allowing for a clickable element to be displayed can be configured, according to an embodiment of the invention, to become a virtual payment terminal usable to enter the user recommendations.

A payment terminal already existing in the prior art may be adapted to realise an embodiment of the present invention, whereby a modified payment service allows for the user to click on or otherwise employ a displayed "R" button (for "Recommend") to prepare the authenticated recommendation centre for a possible future recommendation by that user for some particular purchased goods or services. This feature is known as pre-registering. According to an embodiment, when the payment terminal is used to purchase goods or services, the purchase is logged on the authenticated recommendation server. If the user purchases many goods or services, then the payment terminal may upload a list of the purchased goods or services to the authenticated recommendation server. The payment terminal is used, as normal, to pay for goods and services and the goods and services which are paid for are logged on the payment device. The payment device may be connected, via the Internet for example, by wired or wireless means, to the authenticated recommendation server and the list of goods and services purchased pre-registered by uploading it to the authenticated recommendation server.

According to one embodiment, provision is made for the user to immediately provide his recommendation relative a purchased product. In this case the payment terminal (e.g. mobile article reader) allows the user to enter his recommendation (comment, note or pre-determined multiple choice selection) and the recommendation is uploaded to the authenticated recommendation server. The server can therefore link the user with the goods and the recommendation.

According to another embodiment, instead of providing an immediate recommendation to the authenticated recommendation server, the list of purchased goods is stored on the payment terminal. At some time after the purchase the user can enter his recommendation relative to one or more purchases and store the recommendation on the payment terminal. When a connection can be made available to the authenticated recommendation server the list of purchased goods and recommendations are uploaded to the authenticated recommendation server and are associated with the user.

The user can connect to the authenticated recommendation centre using the payment terminal at some time after a purchase to update or otherwise modify an already entered recommendation or to provide a new recommendation.

According to an embodiment, the interface may be realised as a simple application loaded onto a mobile phone or other suitable mobile communications device such as a tablet computer or personal computer operating as a payment terminal. The application may have access to a user identification, which may be certified and prestored on the payment terminal. The interface allows for a record of the purchased goods to be uploaded to the authenticated recommendation server as well as the user's recommendation. Further evidence useful to provide authentication of a purchase may also be uploaded using the app and the terminal - for example, a proof of payment such as a bill receipt may be uploaded, and/or a photo of the product or a physical location of where the purchase was made using GPS coordinates provided by the payment terminal or a date of payment. Such pieces of evidence provide for further possibilities for detection of fraud.

The application could be configured to provide a GUI on the payment device with pre-determined fields for providing various details regarding a recommendation, such as quality of a product, quality of service, price etc. Pre-determined selectable comments may be provided relative to the fields, with appreciation marks from 1 to 10 for example. This allows for recommendations relative to goods to be provided either directly at the time of purchase or at some later time, such recommendations being uploaded to the authenticated recommendation server to be associated with the user and the payment evidence.

According to embodiments of the invention, users of the system may own an account on the authenticated recommendation server, the account storing updated information pertaining to the user such as age, family situation, country of origin, country of residence and a list of web-sites where the user will provide recommendations. Rather than the user providing recommendations directly on the various web-sites, the user's recommendations relative to the goods or services advertised on those sites and purchased by the user are uploaded onto the authenticated recommendation server with the associated information which will allow the purchase to be authenticated. Once authenticated, the server pushes the recommendations down to the web-sites offering the respective goods and services thereby ensuring that those sites are provided with authenticated, trustable, recommendations corresponding to real payments for the goods or services.

The user will provide to the partners' recommendation sites his user identifier and these could have access to all pre-registered lists of authenticated products/services purchased, select them and provide/complete feedback on those products.

According to an embodiment, especially relevant in the field of so called "big-data", the authenticated recommendation server may gather information from the different recommendation sites and/or merchants' sites, using the identifier, and perform forensic type analyses and/or various correlations to try to determine the authenticity of the recommendation (e.g. using the date, the physical location, the recommendation, any proof or evidence provided and so on) based on other recommendations provided by other users for the same merchant's site.

Embodiments of the present invention allow for authenticated recommendations to be computed and then processed (e.g. filtering) and shared with external recommendation sites or merchants' sites, thereby providing them with trustable, authenticated, recommendations.

Figure 1, showing a system in which an embodiment of the present invention may be deployed, illustrates an authenticated recommendation server, which is configured to push data towards computer servers of different providers of services such as travel advisors, search agents, hotel recommendation sites and the like. The authenticated recommendation server and the other servers may all exist in the cloud. A first user has a payment terminal which he uses to pay for services from service providers, including any of the service providers mentioned above. The payment terminal may be a hardware device with hardware buttons related to certain functions or it could be a virtual device, created in software and represented on a screen for example. The terminal has a button which has a recommendation function. Pressing this button to signify a "like" or a "recommend" related to a transaction just carried out on one of the service providers' sites may trigger invoice management functions including generation of a QR code or bar code or unique ID to identify the transaction. Thus a user who recommends a service will generate a uniquely identifiable code related to that service. The payment terminal is connected to the authenticated recommendation server. Once the service has been paid for the user can provide his recommendation. The authenticated recommendation server can then associate the user identification with the evidence of purchase of the goods and the user's recommendation. The authenticated recommendation server pushes the information to the servers of the service providers. Another user who wants to use a service provided by one of the service providers will then be able to see an authenticated recommendation corresponding to a sale which has been verified and authenticated. The other user can complete an already logged recommendation using a further QR code corresponding to his own purchase and his unique ID to register or can start a new recommendation.

Figure 2 shows how a consumer might act using a terminal configured according to an embodiment of the present invention in a system including an authenticated recommendation server according to the invention and according to a method of an embodiment of the present invention. A consumer (USER1) goes to a restaurant to try some fish (GOODS1). He pays for his meal using the previously mentioned payment terminal (TERM), which has an application configured according to an embodiment of the present invention (APP). The terminal, which could be the consumer's own mobile telephone with the application loaded, can therefore be traced to that particular consumer thanks to at least one identification number associated with the phone. The application generates a GUI with a "recommend" button allowing him to indicate his level of satisfaction with the goods he is purchasing (the meal (GOODs1)). The consumer pays for the meal using the payment terminal and also indicates his level of satisfaction using the application (via the GUI). A reference number is attributed to the payment (PAY1QR) and so the recommendation can be linked to that actual purchase. The reference number can be used to generate a bar-code or a QR code for easy reference. The recommendation (REC1) and its associated payment reference (PAY1QR) are uploaded via Internet to the authenticated recommendation server (AUTH REC SVR) using an account owned by the user. The recommendation is therefore attributed to a real user and corresponds to an actual payment for the goods for which the recommendation is provided. The restaurant owns a website (CAFE) and the authenticated recommendation server downloads the thus-authenticated recommendation to the restaurant's website (CAFE). Any further user who sees the recommendation on the restaurant's website will therefore be seeing an authenticated recommendation (AUTH REC) according to embodiments of the present invention.

## Claims

1. A system for providing an authenticated user recommendation (AUTH REC) relative to a recommendation (REC1) provided by a user (USER1, USER2) for a service or goods (GOODS1) offered by a merchant, the system comprising an authenticated recommendation server (AUTH REC SVR), a mobile payment terminal (TERM) and at least one merchant server (SERVICE1, SERVICE2, SERVICE3, CAFE) for storing the authenticated user recommendation (AUTH REC), the authenticated recommendation server (AUTH REC SVR) being connectable via a network to the merchant server (SERVICE1, SERVICE2, SERVICE3, CAFE) and to the payment terminal (TERM);
**characterised in that**:
the authenticated recommendation sever (AUTH REC SVR) holds a user account corresponding to the user (USER1, USER2);
the payment terminal (TERM) is configured to generate a purchase record (PAY1QR) associated with an act of purchasing the service or goods (GOODS1) and to communicate the purchase record (PAY1QR) and a recommendation (REC1) provided by the user (USER1, USER2) relative to the thus-purchased service or goods (GOODS1) to the authenticated recommendation server (AUTH REC SVR) via the network; and
the authenticated recommendation server is configured to associate the user account with the user recommendation and at least the purchase record and to send the thus-authenticated user recommendation to the merchant server.

2. The system according to claim 1, wherein the payment terminal is further configured to communicate a photo of the service or goods and the authenticated recommendation server is further configured to associate the photo with the user account and the user recommendation to produce the authenticated recommendation.

3. The system according to either of claims 1 or 2, wherein the payment terminal is further configured to communicate a set of GPS coordinates corresponding to a location where the purchase of the service or goods was made and the authenticated recommendation server is further configured to associate the set of GPS coordinates with the user account and the user recommendation to produce the authenticated recommendation.

4. A method for providing an authenticated user recommendation (AUTH REC) relative to a service or goods (GOODS1) offered by a merchant, comprising:
using, by a user (USER1, USER2), a mobile payment terminal (TERM) to generate a purchase identifier corresponding to a purchase of the service or goods (GOODS1);
generating, in the payment terminal (TERM), a purchase code (PAY1QR) related to the purchase identifier once the purchase has been made;
using the payment terminal (TERM) to enter an appreciation by the user (REC1);
transmitting the purchase identifier (PAY1QR) and the corresponding appreciation (REC1) via a network to an authenticated recommendation server (AUTH REC SVR);
storing the appreciation (REC1) on the authenticated recommendation server (AUTH REC SVR) in an account associated with the user (USER1, USER2);
associating, by the authenticated recommendation server (AUTH REC SVR), the appreciation (REC1) with the user (USER1, USER2) and the purchase code (PAY1QR), thereby producing an authenticated recommendation (AUTH REC);
downloading the authenticated recommendation (AUTH REC) to a server corresponding to the merchant (SERVICE1, SERVICE2, CAFE).

5. The method according to claim 4, wherein the purchase code and the appreciation are first stored on the payment terminal and later transmitted to the authenticated recommendation server.

6. The method according to claim 4, wherein the network is a wireless network and the purchase code and the appreciation are transmitted to the authenticated recommendation server immediately following the generation of the purchase code.
